# EUROPEAN PATENT SPECIFICATION

(11) **EP 4 281 811 B1**
(45) Date of publication and mention of the grant of the patent: **13.11.2024**
(21) Application number: 21702189.8
(22) Date of filing: 21.01.2021
(51) Int. Cl.: G01V 1/30, E21B 47/02

(54) **A METHOD OF AND APPARATUS FOR PROCESSING SEISMIC SIGNALS**
VERFAHREN UND VORRICHTUNG ZUR VERARBEITUNG SEISMISCHER SIGNALE
PROCÉDÉ ET APPAREIL DE TRAITEMENT DE SIGNAUX SISMIQUES

(43) Date of publication of application: 29.11.2023
(73) Proprietor: TOTALENERGIES ONETECH, 92400 Courbevoie (FR)
(72) Inventor: KESKES, Noomane, 64018 Pau Cédex (FR)
(74) Representative: Murgitroyd & Company
(86) International application number: PCT/EP2021/051374
(87) International publication number: WO 2022/156899

(56) References cited:
- WO-A1-2015/067864
- US-A1- 2019 025 461
- TONN RAINER: "Neural network seismic reservoir characterization in a heavy oil reservoir", THE LEADING EDGE, vol. 21, no. 3, 1 March 2002 (2002-03-01), US, pages 309 - 312, XP055815598, ISSN: 1070-485X, DOI: 10.1190/1.1463783

## Description

### FIELD OF THE INVENTION

The present invention relates to the processing of seismic signals and notably the field of the interpretation of seismic waves for the precise construction of images, notably for carbonated subsoils and for the detailed characterisation of reservoirs.

### BACKGROUND OF THE INVENTION

When conducting seismic studies, the propagation rate of the seismic wavelet emitted is an important piece of data for the precise determination of a seismic image. Generally, a high propagation rate tends to reduce the vertical resolution of the image constructed using conventional seismic imaging tools.

In particular, calculation uncertainties may be such in defined rate models that a slight error in the time domain may give rise to significant variations in the spatial domain. This problem is increased if the seismic wavelet is propagated at a high rate in the subsoil under study (in particular, if the subsoil comprises carbonates, as in some reservoirs in the Middle East).

Vertical reservoir resolution is however useful for industrial firms seeking to operate these reservoirs. This resolution particularly enables:
- superior estimation of the volumes of hydrocarbons or gas present in the subsoil;
- superior modelling of the reservoirs for subsequent simulations (e.g. geo-modelling);
- superior monitoring of drilling operations;
- etc.

To address this, a method has been described in patent application WO2015/067864 which enables processing of seismic signals in an enhanced way so as to increase seismic image resolution.

However, the methods disclosed in WO2015/067864 relate to vertical wells and do not address the issue of non-vertical wells within the reservoir zone. It would be desirable to apply the methods of WO2015/067864 to non-vertical wells.

Patent document US2019025461 refers to a method for fracture modelling of horizontal wells. Well log data relating to vertical wells and seismic data are used to generate a 3D reservoir model. This 3D model is further used as an input to a 3D fracture model to determine the optimum completion design for the horizontal wells.

### SUMMARY OF THE INVENTION

For this purpose, the present invention proposes to enhance the processing of seismic signals in order to extract a maximum amount of information therefrom, and notably enhance the definition of the seismic images generated.

The present invention thus relates to a method for processing seismic data relating to a reservoir zone comprising a plurality of substantially vertical wells having well-defined trajectories and one or more non-vertical wells; the method comprising: a) obtaining a trained neural network, having been trained to infer well data from seismic data and having been trained on training well data relating only to wells having well-defined trajectories; b) selecting a non-vertical well of said one or more non-vertical wells, said selected non-vertical well having an associated logged trajectory; c) using said trained neural network to invert seismic data relating to said reservoir zone, to obtain inversion well data; d) comparing said inversion well data to observed well data relating to the selected non-vertical well; e) determining, based on said comparison, one or more candidate corrected trajectories for the selected non-vertical well, wherein the one or more candidate corrected trajectories are corrected with respect to the logged trajectory; and f) validating said one of said one or more candidate corrected trajectories to determine a validated corrected trajectory for the selected non-vertical well.

A computer program, using all or part of the method described above, installed on pre-existing equipment, is advantageous per se, insofar as it makes it possible to process a seismic signal effectively.

As such, the present invention also relates to a computer program containing instructions for the use of the method described above, when this program is executed by a processor.

This program can use any programming language (for example, an object or other language), and be in the form of an interpretable source code, a partially compiled code or a fully compiled code.

Further features and advantages of the invention will emerge further on reading the following description.

### BRIEF DESCRIPTION OF THE FIGURES

Embodiments of the invention will now be described, by way of example only, by reference to the accompanying drawings, in which:
Figure 1 illustrates an illustration of seismic reflections in a particular embodiment;
Figure 2a illustrates an example of a seismic signal received in response to the emission of a seismic wavelet in a reservoir and in one embodiment of the invention;
Figure 2b illustrates an example of autocorrelation of the signal in Figure 2a in one embodiment according to the invention;
Figure 3a illustrates an example of well data in one embodiment according to the invention;
Figure 3b illustrates an example of filtered well data in one embodiment according to the invention;
Figure 4a illustrates training of a neural network based on seismic signal data and filtered well data in one embodiment according to the invention;
Figure 4b illustrates a three-dimensional representation of a geological subsoil;
Figure 5 is a flowchart describing an embodiment according to an embodiment; and
Figure 6 is an example of a device suitable for implementing an embodiment of the invention.

### DETAILED DESCRIPTION OF THE INVENTION

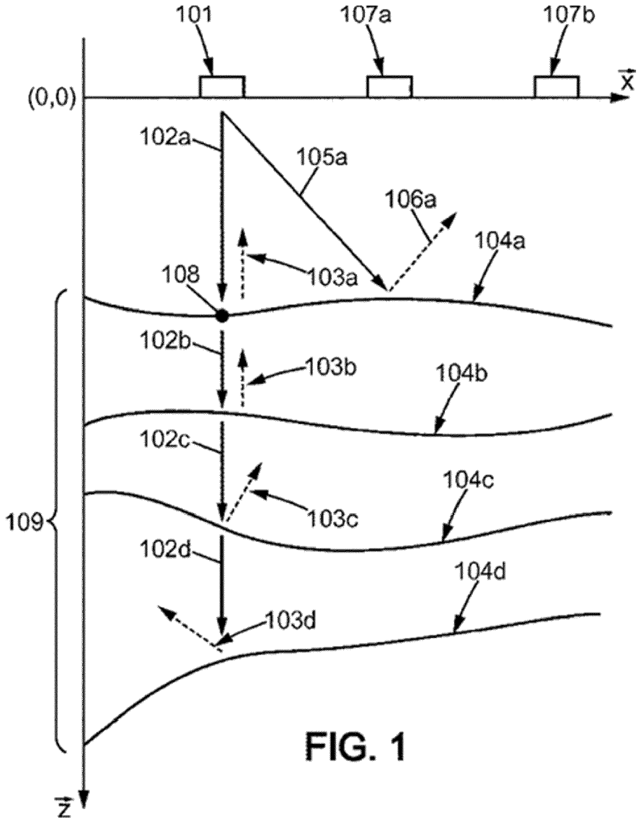

Figure 1 illustrates an illustration of seismic reflections in a particular embodiment. Following the emission of a seismic wavelet in the subsoil, by a seismic vibrator truck 101 for example, this wavelet is propagated in the subsoil vertically (arrow 102 a, 102 b, 102 c, 102 d ) but also in all spatial directions (arrow 105 a).

The term "seismic wavelet" denotes the seismic pulse or elementary wavetrains emitted by the vibration source (e.g. vibrator truck). This wavelet is reflected by the interfaces ( 104 a, 104 b, 104 c, 104 d ) for the change of propagation index in the subsoil: the reflected wave ( 103 a, 103 b, 103 c, 103 d, 106 a) is propagated in a direction symmetric to the direction of incidence with respect to a normal to the interface at the incidence zone. For example, if the interface 104 a is perpendicular to the wave 102 a at the point 108, then the reflected wave 103 a will be in the same direction as the incident wave 102 a (but in the opposite direction).

In order to capture the waves reflected in varied directions, it is possible to place different geophones 107 a or 107 b at different distances (or offsets) from the seismic truck 101. As such, the reflected wave 106 a can be captured by the geophone 107 b.

There are numerous methods for determining, on the basis of the geophone records, the trajectory of the wavelets (e.g. seismic migration). These methods generally supply seismic images based on "pre-stack" signals or on "stack" signals. During the reception of the seismic signal, a portion of the signal arriving after another portion of the signal is generally representative of a reflection located more in-depth. As such, it is possible, with the knowledge of the values of a reservoir 109 in the subsoil, to process a signal received by the different geophones so as to retrieve a filtered/processed signal therefrom, only containing information relating to the reflections occurring within this reservoir (i.e. temporal definition of the signal received).

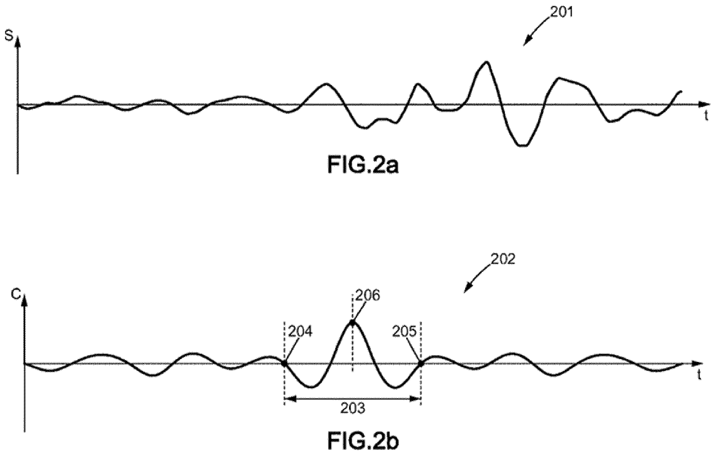

Figure 2a illustrates an example of a seismic signal received in response to the emission of a seismic wavelet in a reservoir. The seismic signal received (optionally after temporal definition as mentioned above) can be represented by the graph 201. The axis t is herein a time axis expressed in seconds, fractions of seconds or in number of samples (the signal being in this case sampled according to a predetermined frequency). The axis S is representative, for example, of a power or an amplitude of the acoustic signal received. Obviously, it is difficult, on the basis of this signal, to determine the shape or length of the wavelet emitted. For this purpose, it is possible to carry out de-convolution of the signal received on the assumption that an interface of the subsoil can be represented by a pulse response optionally including a reflectivity model and/or an attenuation model. This method is relatively complex to implement and implies good knowledge of the temporal position of the interfaces. Furthermore, this de-convolution is generally incomplete and a signal containing high-frequency information (e.g. greater than 100 Hz) may remain. This residual signal is generally considered, by the prior art, as a noise.

Figure 2b illustrates an example of autocorrelation of the signal in Figure 2a. Indeed, it is possible to determine an estimation of the length of the wavelet emitted without having to compute complex de-convolutions. It is possible to compute the autocorrelation of the signal received after temporal definition thereof in a time window corresponding to the reservoir. An autocorrelation is a correlation of a signal by itself, this second signal being offset by a given time interval. The autocorrelation of the signal 201 is the curve 202. The X-axis of this curve represents the time interval between the two correlated identical signals and the Y-axis shows the correlation of these two curves for the time interval in question.

In Figure 2b, the correlation of the two signals is sometimes high, sometimes low. The repetition (or "respiration") of this correlation thus makes it possible to determine a representative correlation distance of the length of the wavelet having generated this signal. This correlation distance 203 is the distance between the two symmetric zeros ( 204, 205 ) with respect to the maximum peak 206. If a plurality of distances are used to compute the length of the wavelet (e.g. for a plurality of seismic traces), it is possible to determine a variance of this distance in order to determine the precision of this determination.

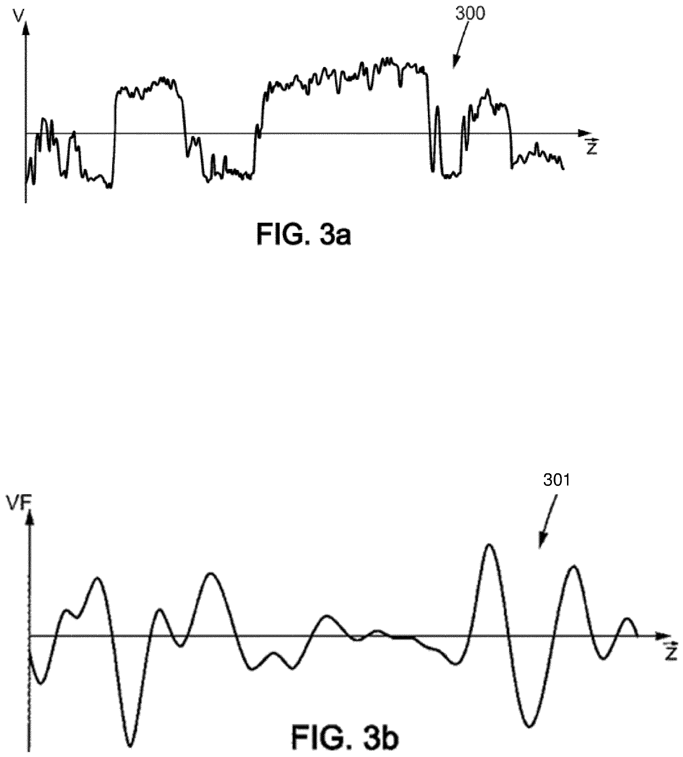

Figure 3a illustrates an example of well data. The term "well data" denotes geological, geophysical or other data, obtained, for example, from drill holes. They are, for example, one or a plurality of pieces of information located along the well relating to one or more of: the facies of the subsoil; rock reflectivity; rock porosity; rock resistivity; rock elasticity; rock permeability; etc.. When the well data only contain a single piece of information (e.g. the reflectivity), the term "geological information" may be used. More specifically, the well data may comprise a large number of pieces of information which have been previously filtered/sorted/computed so as to only contain a single type of data (e.g. reflectivity, porosity, etc.): filtered well data are generally referred to as "geological information". However, the term well data will be used in its widest sense below to cover processed geological information also. Most of these pieces of information may be expressed in numeric form (e.g. the reflectivity expressed as a percentage, the permeability expressed in Darcy, the porosity expressed as a percentage, etc.).

The well data or geological information may comprise a piece of information from a group including a piece of porosity information, a piece of reflectivity information, a piece of density information, a piece of resistivity information and a piece of mineralogical composition information, a piece of gamma-ray log information, a piece of density information, a piece of sound propagation rate information, a piece of permeability information and a piece of saturation information. The second piece of geological information may be a piece of filtered information in a given frequency range. The given frequency range may be a single frequency.

This filtering makes it possible to limit the amount of information for training the neural network.

By way of illustration, the curve 300 represents well data for a reservoir zone of the subsoil (relating to the rock reflectivity). The X-axis of this curve represents the depth of the well data item and the Y-axis represents the value thereof. These data are data containing "high-frequency" information.

Figure 3b illustrates an example of filtered well data. It is possible to process the raw well data received in order to obtain modified/processed data. For example, the processing may comprise a filter making it possible to only retain a fine frequency range (e.g. 90-100 Hz) or advantageously a broader frequency range (e.g. from 0 Hz to 200 Hz) including the value 0 Hz. The curve 301 represents the data derived from filtering the data of the curve 300 through a bandpass filter (e.g., having a frequency band of 10-50 Hz.

The aforementioned WO2015/067864 described an inversion method based on training a neural network and using this trained neural network to infer well data or geological information from seismic data (e.g., the trained network may be used as a seismic to well tie). The concepts disclosed therein are based on an assumption that the seismic wavelet is substantially constant (or subject to little variation) throughout the "reservoir" domain or zone (i.e. consisting of rock suitable for capturing gas or hydrocarbons). The use of the trained neural network makes it possible to ignore the seismic wavelet considered to be constant or invariant in the domain considered (i.e., a blind decomposition or deconvolution as the variation thereof is very small in this domain), as a neural network can be trained to deconvolve or remove such an invariant wavelet through training. The neural network can then use knowledge of a well (measured well log data) to enhance the resolution of the seismic acquisition in another domain of the subsoil ("generalisation").

It should be appreciated that any reference to removing the seismic wavelet by the trained neural network comprises removing only the remaining wavelet or residual wavelet which is not removed during standard seismic processing, as initial seismic processing will remove most of the wavelet

The training of the neural network may comprise the following steps:
- receiving seismic data (e.g., pre-stack seismic data) comprising at least one seismic signal derived from the emission of a seismic wavelet in a subsoil;
- identifying at least one portion of each seismic signal corresponding to reflections of the seismic wavelet in a reservoir zone of said subsoil, and determining a length of the seismic wavelet (e.g., using the methods described above);
- receiving well data corresponding to said identified reservoir zone; and
- training a neural network using training data comprising: a plurality of sub-portions of the at least one portion as input variables, where the sub-portions each have a length dependent on the determined length of the seismic wavelet, and at least one second piece of geological information according to said well data as a target variable.

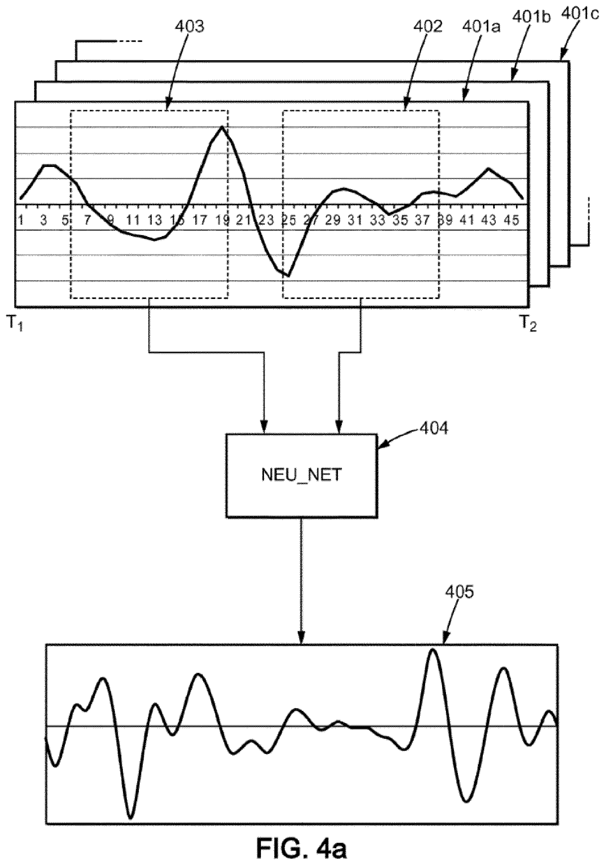

Figure 4a illustrates this training of a neural network based on seismic signal data and filtered well data. In order to carry out training of a neural network 404 using a back propagation principle, it is useful to provide the neural network 404 with numerous examples of input values associated with one or a plurality of output values. These values are referred to as a "training set". This training is in fact "supervised" training as the correct output values (measured well data) are known for each input value (seismic data). During the training, the nodes of the neural network 404 are modified. Numerous algorithms are possible for such modifications (i.e. modification of weightings of the different nodes).

It is also possible to envisage a set of input and output values suitable for validating the neural network and/or computing the error of this network: this is referred to as the "validation set". In practice, the training set is frequently approximately two times greater than the validation set (e.g. in a 70%-30% ratio for example).

In the embodiment shown, it is possible to adopt a plurality of sub-portions ( 402, 403 ) of the pre-stack signal ( 401a, 401b, 401c, etc.) as input values. Obviously, if the signal is a stack signal, it is possible to work directly with this signal rather than with each of the pre-stack signals. Using pre-stack signals makes it possible to prevent of the loss of "high-frequency" information associated with the stacking of signals which are not perfectly "corrected" (e.g. "normal moveout correction"). The length of these sub-portions may be chosen to be the length of the wavelet determined previously, or slightly longer. For example, length of these sub-portions may comprise a multiple of the length of the wavelet determined previously. As such, the length of these sub-portions may be between 1 and 2 times the determined wavelet length (e.g., 1x, 1.1x or 1.5x or 2x the determined wavelet length) as the length of these sub-portions: If the sub-portion is slightly greater than the wavelet, the precision of the neural network can be greater, particularly in the event of poor evaluation of the length of the wavelet or in the event of poor well-seismic alignment, even though the convergence of the neural network during training may be slower. As such, the sub-portion length chosen may be a factor of the uncertainty on the wavelet length evaluation/or well-seismic alignment, with longer lengths chosen when uncertainty is greater.

It is possible to take a single output value for all the input values of the training set. This single output value is the processed/filtered signal 405 derived from the well data and limited to the "reservoir" domain. Training the neural network can make it possible to avoid computing complex de-convolutions as mentioned with reference to Figure 2a. Furthermore, the neural network accounts for the entire signal received, including the "high-frequency" information previously considered as noise, to be removed from the computations.

The data returned by the neural network are of the same type as the well data used for training: e.g., if the well data used for training are pieces of reflectivity information, the neural network returns reflectivity information, etc..

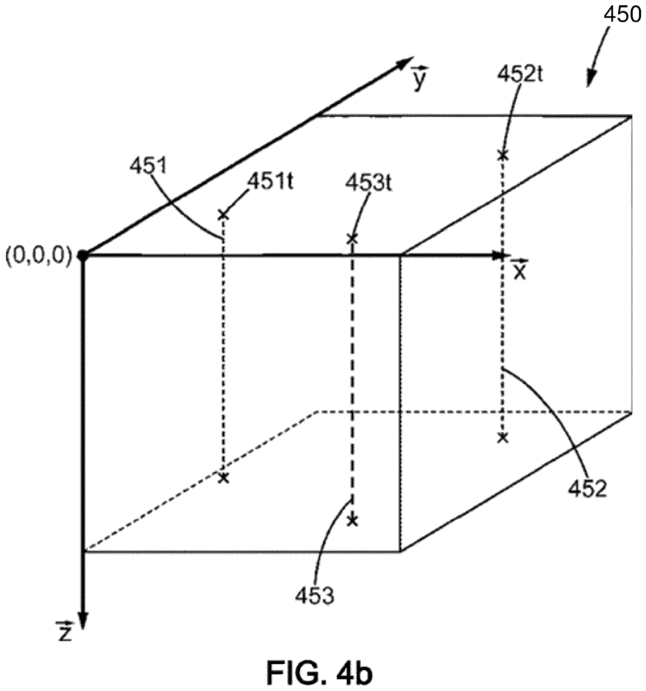

Figure 4b illustrates a three-dimensional representation of a geological subsoil. In this representation 450, the well data on the wells 451 and 452 are known. It is thus possible to carry out training of the neural network 404 using, as input data, sub-portions of the pre-stack signal received at the wellhead 451 t and associated with the known well data on the well 451. It is also possible to add to these input and output data, further data obtained from other wells such as the well 452. As such, the training may be carried out using as input data:
- sub-portions of the pre-stack signal received at the wellhead 451t and associated with the known well data on the well 451 (and optionally modified as described above); and
- sub-portions of the pre-stack signal received at the wellhead 452t and associated with the known well data on the well 452 (and optionally modified as described above).

Once the training of the neural network is complete, it is possible to have the neural network determine well data along a "virtual" well (i.e. vertical segment along *̅z̅*̅ of the space *x̅, y̅,* z̅) not actually drilled, e.g. segment 453 ) on the basis of the seismic signal received at the wellhead (e.g. point 45 3t) of this "virtual" well.

A main advantage of BNNI techniques disclosed in WO2015/067864 is that more of the seismic signal (e.g., including the high frequency information normally filtered out as noise) can be used in training the neural network and therefore can be used in inverting the seismic data using the trained neural network. While the seismic data may still be filtered to remove very high frequency content, BNNI techniques enable the retention of seismic data up to 2 to 3 times the frequency of the seismic wavelet, for example. This is a consequence of the assumption that the seismic wavelet is constant within the reservoir zone. Using seismic data including all high frequency information and an assumed constant wavelet to train the neural network will mean that the neural network will learn to deconvolve the wavelet (the learning will remove the constant component) when learning to map the seismic data to the well data. This high frequency information comprises useful reservoir information.

When non-vertical wells are drilled, the recorded trajectory has a high uncertainty, particularly at longer distances along well path from wellhead. The neural network learns from well data at a well position. If the well position is not known accurately, the learning suffers. As such, non-vertical wells are typically left out of the training process. For example, the above description of the BNNI concept (e.g., as disclosed within WO2015/067864), describes inversion with respect to vertical wells. However, to increase reservoir heterogeneity knowledge, it is desirable that the non-vertical wells are integrated into the inversion process as they present many samples (training data) for the learning process.

With a view to improve the seismic inversion process (in particular using BNNI techniques as described above), a methodology is proposed which aids adjustment of non-vertical well trajectory in accordance with known well data in the domain, as determined from existing vertical wells.

To begin, a well-to-seismic tie is performed; for example, this comprises training a neural network on only (one or more) vertical wells comprised within a reservoir zone such that the neural network can estimate well data from seismic data recorded at the reservoir zone (e.g., perform a blind inversion). Such training may use the aforementioned BNNI methods based on the assumption of a constant wavelet which does not require characterization. It may be assumed that the well data and well locations for these vertical wells are accurate, and may have been determined and/or observed/recorded using any known or suitable method.

The machine learning technique may then be adapted to refine the neural network model based on the non-vertical wells present in the reservoir zone (e.g., characterising and integrating one non-vertical well at a time). Using such a technique contributes to decrease the level of uncertainty when building reservoir models (high-resolution seismic inversion). In this manner, the machine learning is used to improve the correction of the non-vertical well trajectory.

The (e.g., pre-stack) seismic data which was used to train the neural network may have comprised its high frequency content (e.g., this high frequency content was not filtered out). As such, any seismic data used in the steps described below may similarly comprise pre-stack data not filtered to remove high frequency content.

Within the training data, seismic data from each location will be associated with well data corresponding substantially to the same respective location. However there will be an uncertainty associated with the well-seismic alignment. In particular, with respect to non-vertical wells, if a seismic signal is received as a coordinate (x,y,z where conventionally z or t describes the depth direction perpendicular the surface plane defined by the x and y directions), the coordinates for each portion of the non-vertical well may be x±Δx, y±Δy, z±Δz (or t±Δt) where Δx, Δy, Δz are representative values of an uncertainty relating to the well-seismic alignment (e.g., they define a respective region of uncertainty Δx*Δy*Δz associated with each portion of the non-vertical well).

Therefore, the well location x0, y0, z0 for well data corresponding to each portion of the non-vertical well may be considered to be somewhere within a region of uncertainty defined by a volume Δx*Δy*Δz around a position x,y,z associated with the corresponding seismic data. This well location may be considered in terms of probabilities within this region. The locations of some wells will be known with more certainty than others. The trajectory of non-vertical wells are particularly difficult to determine.

The proposed method may be performed one non-vertical well at a time, adding each solved non-vertical well once solved. This may comprise integrating the non-vertical well data iteratively via further training steps each time a non-vertical well trajectory is solved. Each non-vertical well can then be used to test the process e.g., against at least some vertical wells (and optionally solved non-vertical wells). In this manner, each non-vertical well may be iteratively integrated into the system.

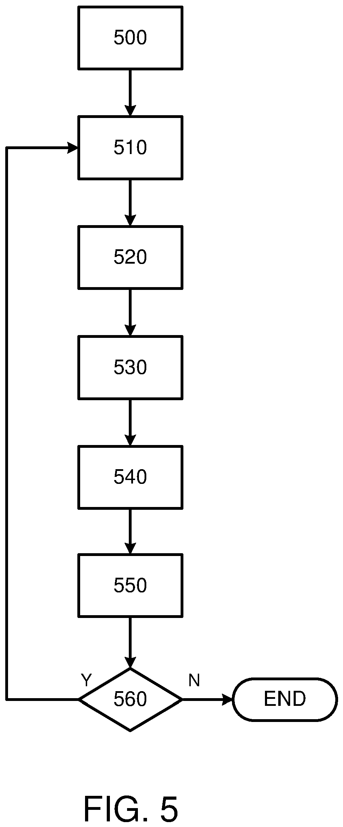

Figure 5 is a flowchart describing a method according to an embodiment. At step 500, a neural network is trained on well data and seismic data relating only to substantially vertical wells (e.g., one, some or all vertical wells within a reservoir zone). In an embodiment, no training data from non-vertical wells are included in this initial learning process. However, a non-vertical well may be included if its location with respect to seismic is well defined (e.g., by another method).

At step 510, a non-vertical well within the reservoir zone is chosen and its initial trajectory (e.g., the logged trajectory during drilling) divided into portions. The portions may comprise a set length, e.g., each portion may comprise a certain length of trajectory. The entire length of each portion may be assigned a respective single position and have associated with it a respective region of uncertainty. As such, a single trajectory correction may be defined for each portion. Each portion may comprise a length smaller than 100m, a length smaller than 75m, a length smaller than 50m, a length smaller than 30m, a length smaller than 20m or a length smaller than 15m for example. Each portion may be longer than or equal to 2m, 5m or 10m for example. Each portion may correlate with a drilling portion.

Each region of uncertainty may be defined in terms of a certain number of seismic blocks or units of the seismic cube (inversion result), although other units may be used. The number of blocks may be the same in each direction, or may differ depending on other geological factors. The specific example above defined each region of uncertainty as a respective 10x10x10 block cube for each portion, although this may of course differ. The size of the region of uncertainty may be the same for all portions, or differ for at least some portions.

At step 520, the trained neural network is used to invert the seismic data relating to the reservoir zone. For example, the seismic data may relate to the selected non-vertical well or portion thereof (each portion may be treated as if it were an individual vertical well for the inversion). More specifically, the seismic data corresponding to respective portions of the non-vertical well may be inverted with each of the portions being treated as being an effective separate (e.g., vertical) well.

The result of the inversion may comprise an inversion cube/space or inversion result relating to the non-vertical well or portion thereof. Such an inversion cube may comprise a log property attribute cube (e.g., a porosity cube, gamma ray cube, etc.) for example. In other iterations, this inversion will include seismic data relating to the solved (trajectory corrected) non-vertical wells.

At step 530 a trajectory correction is determined per portion for the selected non-vertical well. The trajectory correction may be determined based on maximizing a correlation (e.g., or minimize an error metric) between the inversion cube (inversion result or modelled/inversion well data) and the well log cube or known well data for the non-vertical well (e.g., the recorded trajectory of the non-vertical well. As such, for each region, the trajectory may be moved to maximize correlation with the inversion result. This correction will be subject to one or more drilling constraints (e.g., based on drilling physics), and as such corrections for each portion should not be determined in isolation, but such that adjacent two or more portions meet the drilling constraint(s), e.g., such that they define an allowable trajectory. For example, the well path must comprise a path which can actually be drilled according to drilling physics. As such, this step may actually result in a plurality of possible well paths, many or most of which can be discounted as being physically impossible or nonsensical. More specifically, for each non-vertical well, the method may comprise determining a trajectory correction within the limits Δx, Δy, Δz which maximizes correlation between the recorded log of the non-vertical well (as corrected) with respect to the inversion cube (inversion well data) for each drilling portion of the well defined by the trajectory uncertainty, but such that any two adjacent portions always defines a curvature which respects the drilling constraint. For example, a dog-leg constraint may prohibit dog-legs or curvatures and/or deviation angles (e.g., between respective portions) that are too high. This step may yield multiple possible or candidate solutions (i.e., the solution may be non-unique even taking the constraint(s) into account).

Step 540 is a validation step which validates the candidate solution(s) (corrected trajectories) for the non-vertical well under consideration. Such a step may validate the candidate solution(s) (e.g., as defined in step 530) against at least some (e.g., a validation subset) of the vertical wells which are assumed to have a known and well-defined position and trajectory. The validation may determine whether introduction of the non-vertical well as solved maintains the correct relationship for the validation subset of the (calibrated) vertical wells. Where there are several candidate solution, the most probable solution may be the solution which best predicts the validation subset of vertical wells.

The step may comprise selecting a training subset of the vertical wells (possibly including one or more solved non-vertical wells) and retraining the neural network based on this training set and the non-vertical well as defined by the possible solution under consideration. The retrained neural network can then be used to predict the validation subset of the vertical wells (e.g., it can be used to invert seismic data for the validation subset). The validation subset should be different from the training subset, e.g., non-overlapping. The prediction may be compared to the known well data for the validation subset. This retraining and comparing may be repeated (e.g., iteratively) for each possible or candidate solution. The validated solution (or chosen solution) may be the solution which best predicts the validation set.

If all the candidate solutions result in worsened performance for the retrained network, the result for this non-vertical well may be discarded and the method repeated for another non-vertical well instead. This may be indicative of the non-vertical well being too complex for this method.

At step 550, the neural network may be retrained using all available training seismic and well data including training data relating the non-vertical well having had its trajectory solved in the previous step.

At step 560, it is determined whether are any more non-vertical wells to be considered. If so, the process returns to step 510 and steps 510 to 550 are repeated for another non-vertical well, with the results for each corrected trajectory added as the method proceeds. If not the process ends.

The proposed method provides a better estimation of the position and/or trajectory of non-vertical wells, and the addition of each non-vertical well increases the number of samples for the learning process, which will improve the heterogeneity of the considered reservoir zone.

The proposed method may also be used to find the best path through the reservoir domain (volume) with respect to a drilling constraint (e.g., based on what is physically possible).

It can be appreciated that this method of determining the position and/or trajectory of non-vertical wells is driven by result- i.e., the inversion. The resulting correction is that which bets fits the relation with the recorded wells.

The final trained neural network (e.g., as trained at step 540 for the chosen trajectory in the final iteration), once determined, can be used to improve inversion of seismic data relating to the reservoir zone. Alternatively, a further retraining of the neural network may be performed with training data relating to all of the solved non-vertical wells in addition to the vertical wells. In either case, this retrained neural network will have been trained on additional data (i.e., data relating to the non-vertical wells) and therefore will perform better.

As such, the method may further comprise performing inversion on seismic data using the retrained neural network, to obtain corresponding well data (i.e., to obtain data which characterises the well or other subsurface region in terms of one or more geological parameters). More specifically, the method may comprise performing a BNNI inversion using the retrained neural network on seismic data for the reservoir zone. The well data may be used to predict downhole conditions and make decisions concerning field operations. Such decisions may involve well planning, well targeting, well completions, operating levels, production rates and other operations and/or operating parameters.

Within the context of this disclosure, the terms vertical and non-vertical are not necessarily specific. Vertical wells in this context may comprise wells having a trajectory which is substantially vertical (e.g., the trajectory remains within 45 degrees, within 30 degrees or within 20 degrees with respect to the z axis along a substantive portion (e.g., more than 30%, 50% or 70% or 100%) of its length. Non-vertical well may comprise any wells which are not "vertical" according to the above definition. This may include wells which comprise a substantially horizontal trajectory along a substantive portion (e.g., more than 30%, 50% or 70% or 100%) of its length. A substantially horizontal trajectory may comprise an angle within 45 degrees, within 30 degrees or within 20 degrees with respect to the x-y plane.

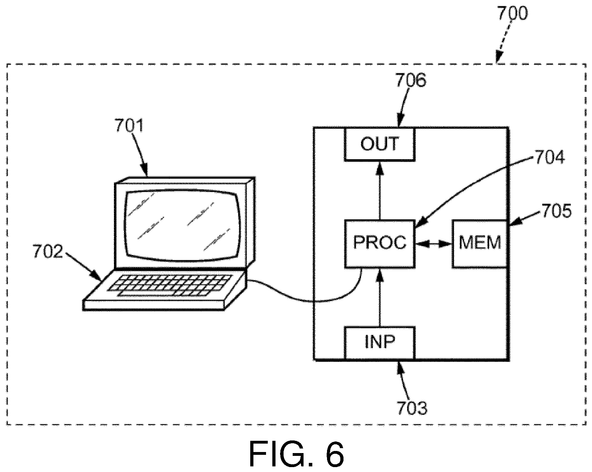

Figure 6 represents an example of a device for processing a seismic signal.

In this embodiment, the device includes a computer 700, comprising a memory 705 to store instructions for implementing the method, the measurement data received, and temporary data to carry out the various steps of the method as described above.

The computer further includes a circuit 704. This circuit can be, for example:
- a processor suitable for interpreting instructions in computer program format, or
- an electronic card wherein the steps of any of the methods disclosed herein are described in silicon, or
- a programmable electronic array such as an FPGA array (Field-Programmable Gate Array).

This computer includes an input interface 703 for receiving seismic data or well data, and an output interface 706 for supplying the well data at any spatial point. Finally, the computer can include, to enable easy interaction with a user, a screen 701 and a keyboard 702. Obviously, the keyboard is optional, notably in the case of a computer in the form of a tactile tablet, for example.

Obviously, the present invention is not limited to the embodiments described above by way of examples; it applies to further alternative embodiments. The invention is defined solely by the appended claims.

The methods disclosed herein may comprise optimizing a production strategy based on the corrected trajectories and/or trained network which has been trained using said corrected trajectories. Optimizing a production strategy may comprise selecting from and/or optimizing one or more of: different well placements, different number of wells, different injection fluid pressures, different injection strategies, different injection fluids and/or drilling used. Optimizing hydrocarbon recovery may comprise selecting one or more of said different production strategies which are determined to maximize hydrocarbon production and/or minimize production costs.

The concepts described herein find utility in all aspects of surveillance, monitoring, optimisation and prediction of hydrocarbon reservoir and well systems, and may aid in, and form part of, methods for extracting hydrocarbons from such hydrocarbon reservoir and well systems.

One or more steps of the methods and concepts described herein may be embodied in the form of computer readable instructions for running on suitable computer apparatus, or in the form of a computer system comprising at least a storage means for storing program instructions embodying the concepts described herein and a processing unit for performing the instructions.

As is conventional, the storage means may comprise a computer memory (of any sort), and/or disk drive, optical drive or similar. Such a computer system may also comprise a display unit and one or more input/output devices.

The concepts described herein find utility in all aspects of surveillance, monitoring, optimisation and prediction of hydrocarbon reservoir and well systems, and may aid in, and form part of, methods for extracting hydrocarbons from such hydrocarbon reservoir and well systems.

It should be appreciated that the above description is for illustration only and other embodiments and variations may be envisaged, as long as they don't depart from the scope of the invention as defined by the appended claims.

## Claims

1. A method for processing seismic data relating to a reservoir zone comprising a plurality of substantially vertical wells having well-defined trajectories and one or more non-vertical wells; the method comprising:
a) obtaining (500) a trained neural network, having been trained to infer well data from seismic data and having been trained on training well data relating only to wells having well-defined trajectories;
b) selecting (510) a non-vertical well of said one or more non-vertical wells, said selected non-vertical well having an associated logged trajectory;
c) using (520) said trained neural network to invert seismic data relating to said reservoir zone, to obtain inversion well data;
the method **characterised in that** it further comprises:
d) comparing said inversion well data to observed well data relating to the selected non-vertical well;
e) determining (530), based on said comparison, one or more candidate corrected trajectories for the selected non-vertical well, wherein the one or more candidate corrected trajectories are corrected with respect to the logged trajectory; and
f) validating (540) said one of said one or more candidate corrected trajectories to determine a validated corrected trajectory for the selected non-vertical well.

2. A method as claimed in claim 1, wherein said observed well data comprises well data logged during drilling of the selected non-vertical well, and said logged trajectory comprises the trajectory logged during said drilling.

3. A method as claimed in claim 2, wherein said validating step comprises:
selecting a candidate corrected trajectory of said one or more candidate corrected trajectories;
selecting a training subset of at least said plurality of substantially vertical wells, and a validation subset of at least said plurality of substantially vertical wells, the training subset being different to said validation subset;
retraining the neural network using training data relating to said training subset and the non-vertical well having a trajectory defined by the selected candidate corrected trajectory;
using the retrained neural network to predict well data relating to the validation subset;
comparing the predicted well data to known well data for the validation subset.

4. A method as claimed in claim 3, wherein the method comprises:
performing said validating step for each of said one or more candidate corrected trajectories; and
selecting, as said validated corrected trajectory, the candidate corrected trajectory for which the predicted well data is most similar to the known well data in said step of comparing the predicted well data to known well data for the validation subset.

5. A method as claimed in any preceding claim, wherein said d) comprises determining as a candidate corrected trajectory, a trajectory which maximizes correlation of said inversion well data to observed well data.

6. A method as claimed in any preceding claim, wherein steps d) and e) are performed per trajectory portion of the selected non-vertical well, wherein each of said portions comprises a respective region of uncertainty and each candidate corrected trajectory is determined within the respective region of uncertainty for each of said portions; and wherein step c) is performed individually per portion, treating each portion as a vertical well.

7. A method as claimed in any preceding claim, wherein step e) is performed subject to one or more constraints, such that said one or more candidate corrected trajectories respect said constraints; wherein said one or more constraints comprise one or more drilling constraints based on drilling physics and/or wherein said one or more constraints define a maximum curvature and/or deviation angle along the trajectory.

8. A method as claimed in any preceding claim wherein said training well data in a first training of said neural network relates only to said plurality of substantially vertical wells.

9. A method as claimed in any preceding claim, comprising:
performing steps b) to f) iteratively for each of said non-vertical wells, wherein, for each iteration, the neural network is retrained with training data comprising data relating to the validated non-vertical well as validated in that iteration; and
using the neural network trained at the final iteration to perform an inversion on further seismic data relating to said reservoir zone to obtain further well data relating to said reservoir zone.

10. A method as claimed in claim 9 comprising a final step of retraining the neural network on all validated non-vertical wells; and
using the retrained neural network to perform an inversion on further seismic data relating to said reservoir zone to obtain further well data relating to said reservoir zone.

11. A method as claimed in any preceding claim, wherein said seismic data comprises one or both of:
high frequency content up to 3 times the frequency of a seismic wavelet emitted in a subsoil to obtain said seismic data; and/or
pre-stack seismic data.

12. A method as claimed in any preceding claim, comprising an initial step of training said neural network based on training data relating to only said substantially vertical wells to obtain said trained neural network.

13. A method as claimed in claim 12, wherein said initial step and any other training or retraining step comprises:
receiving said seismic data comprising at least one seismic signal derived from the emission of a seismic wavelet in a subsoil;
identifying at least one portion of said at least one seismic signal corresponding to reflections of the seismic wavelet in the reservoir zone;
determining a length of the seismic wavelet;
receiving well data corresponding to said identified reservoir zone;
training the neural network using:
a plurality of sub-portions of said at least one portion as input variables, said sub-portions of the portion having a length dependent on the length of the seismic wavelet determined, and
at least one piece of well data, or geological information corresponding to said well data, as a target variable.

14. A method as claimed in claim 13, wherein the wavelet length is determined according to an autocorrelation calculation of said at least one portion.

15. A computer program comprising computer readable instructions which, when run on suitable computer apparatus, cause the computer apparatus to perform the method of any preceding claim.

## Patentansprüche

1. Ein Verfahren zum Verarbeiten seismischer Daten, die sich auf eine Lagerstättenzone beziehen, welche eine Vielzahl von im Wesentlichen vertikalen Bohrlöchern mit gut definierten Verläufen und ein oder mehrere nicht vertikale Bohrlöcher beinhaltet; wobei das Verfahren Folgendes beinhaltet:
a) Erhalten (500) eines trainierten neuronalen Netzwerks, das trainiert wurde, um aus seismischen Daten Bohrlochdaten abzuleiten, und mit Trainingsbohrlochdaten trainiert wurde, die sich nur auf Bohrlöcher mit gut definierten Verläufen beziehen;
b) Auswählen (510) eines nicht vertikalen Bohrlochs aus dem einen oder den mehreren nicht vertikalen Bohrlöchern, wobei das ausgewählte nicht vertikale Bohrloch einen zugehörigen aufgezeichneten Verlauf aufweist;
c) Verwenden (520) des trainierten neuronalen Netzwerks, um seismische Daten zu invertieren, die sich auf die Lagerstättenzone beziehen, um Inversionsbohrlochdaten zu erhalten;
wobei das Verfahren **dadurch gekennzeichnet ist, dass** es ferner Folgendes beinhaltet:
d) Vergleichen der Inversionsbohrlochdaten mit beobachteten Bohrlochdaten, die sich auf das ausgewählte nicht vertikale Bohrloch beziehen;
e) Bestimmen (530), auf der Basis des Vergleichs, eines oder mehrerer korrigierter Kandidatenverläufe für das ausgewählte nicht vertikale Bohrloch, wobei der eine oder die mehreren korrigierten Kandidatenverläufe in Bezug auf den aufgezeichneten Verlauf korrigiert werden; und
f) Validieren (540) des einen von dem einen oder den mehreren korrigierten Kandidatenverläufen, um einen validierten korrigierten Verlauf für das ausgewählte nicht vertikale Bohrloch zu bestimmen.

2. Verfahren gemäß Anspruch 1, wobei die beobachteten Bohrlochdaten Bohrlochdaten beinhalten, die während des Bohrens des ausgewählten nicht vertikalen Bohrlochs aufgezeichnet wurden, und der aufgezeichnete Verlauf den während des Bohrens aufgezeichneten Verlauf beinhaltet.

3. Verfahren gemäß Anspruch 2, wobei der Validierungsschritt Folgendes beinhaltet:
Auswählen eines korrigierten Kandidatenverlaufs aus dem einen oder den mehreren korrigierten Kandidatenverläufen;
Auswählens eines Trainingsteilsatzes aus mindestens der Vielzahl von im Wesentlichen vertikalen Bohrlöchern und eines Validierungsteilsatzes aus mindestens der Vielzahl von im Wesentlichen vertikalen Bohrlöchern, wobei sich der Trainingsteilsatz von dem Validierungsteilsatz unterscheidet;
Neutrainieren des neuronalen Netzwerks unter Verwendung von Trainingsdaten, die sich auf den Trainingsteilsatz und das nicht vertikale Bohrloch mit einem Verlauf, der durch den ausgewählten korrigierten Kandidatenverlauf definiert wird, beziehen;
Verwenden des neu trainierten neuronalen Netzwerks, um Bohrlochdaten vorherzusagen, die sich auf den Validierungsteilsatz beziehen;
Vergleichen der vorhergesagten Bohrlochdaten mit bekannten Bohrlochdaten für den Validierungsteilsatz.

4. Verfahren gemäß Anspruch 3, wobei das Verfahren Folgendes beinhaltet:
Durchführen des Validierungsschritts für jeden von dem einen oder den mehreren korrigierten Kandidatenverläufen; und
Auswählen, als den validierten korrigierten Verlauf, des korrigierten Kandidatenverlaufs, für den die vorhergesagten Bohrlochdaten den bekannten Bohrlochdaten in dem Schritt des Vergleichens der vorhergesagten Bohrlochdaten mit bekannten Bohrlochdaten für den Validierungsteilsatz am ähnlichsten sind.

5. Verfahren gemäß einem der vorhergehenden Ansprüche, wobei das d) das Bestimmen eines Verlaufs, der die Korrelation der Inversionsbohrlochdaten mit beobachteten Bohrlochdaten maximiert, als einen korrigierten Kandidatenverlauf beinhaltet.

6. Verfahren gemäß einem der vorhergehenden Ansprüche, wobei die Schritte d) und e) pro Verlaufsabschnitt des ausgewählten nicht vertikalen Bohrlochs durchgeführt werden, wobei jeder der Abschnitte einen jeweiligen Unsicherheitsbereich beinhaltet und jeder korrigierte Kandidatenverlauf innerhalb des jeweiligen Unsicherheitsbereichs für jeden der Abschnitte bestimmt wird; und wobei Schritt c) individuell pro Abschnitt durchgeführt wird, wobei jeder Abschnitt als vertikales Bohrloch behandelt wird.

7. Verfahren gemäß einem der vorhergehenden Ansprüche, wobei Schritt e) unter einer oder mehreren Randbedingungen durchgeführt wird, sodass der eine oder die mehreren korrigierten Kandidatenverläufe die Randbedingungen einhalten; wobei die eine oder die mehreren Randbedingungen eine oder mehrere Bohrrandbedingungen auf der Basis der Physik des Bohrens beinhalten und/oder wobei die eine oder die mehreren Randbedingungen eine maximale Krümmung und/oder einen maximalen Abweichungswinkel entlang des Verlaufs definieren.

8. Verfahren gemäß einem der vorhergehenden Ansprüche, wobei sich die Trainingsbohrlochdaten bei einem ersten Trainieren des neuronalen Netzwerks nur auf die Vielzahl von im Wesentlichen vertikalen Bohrlöchern beziehen.

9. Verfahren gemäß einem der vorhergehenden Ansprüche, beinhaltend:
iteratives Durchführen der Schritte b) bis f) für jedes der nicht vertikalen Bohrlöcher, wobei das neuronale Netzwerk für jede Iteration mit Trainingsdaten neu trainiert wird, die Daten beinhalten, die sich auf das validierte nicht vertikale Bohrloch beziehen, das in dieser Iteration validiert wird; und
Verwenden des in der letzten Iteration trainierten neuronalen Netzwerks, um eine Inversion weiterer seismischer Daten durchzuführen, die sich auf die Lagerstättenzone beziehen, um weitere Bohrlochdaten zu erhalten, die sich auf die Lagerstättenzone beziehen.

10. Verfahren gemäß Anspruch 9, beinhaltend einen letzten Schritt des Neutrainierens des neuronalen Netzwerks mit allen validierten nicht vertikalen Bohrlöchern; und
Verwenden des neu trainierten neuronalen Netzwerks, um eine Inversion weiterer seismischer Daten durchzuführen, die sich auf die Lagerstättenzone beziehen, um weitere Bohrlochdaten zu erhalten, die sich auf die Lagerstättenzone beziehen.

11. Verfahren gemäß einem der vorhergehenden Ansprüche, wobei die seismischen Daten eines oder beides von Folgendem beinhalten:
Hochfrequenzinhalt, der bis zu 3-mal die Frequenz eines in einem Untergrund zum Erhalten der seismischen Daten emittierten seismischen Nutzsignals aufweist; und/oder
seismische Prestack-Daten.

12. Verfahren gemäß einem der vorhergehenden Ansprüche, beinhaltend einen anfänglichen Schritt des Trainierens des neuronalen Netzwerks auf der Basis von Trainingsdaten, die sich nur auf die im Wesentlichen vertikalen Bohrlöcher beziehen, zum Erhalten des trainierten neuronalen Netzwerks.

13. Verfahren gemäß Anspruch 12, wobei der anfängliche Schritt und jeglicher andere Trainier- oder Neutrainierschritt Folgendes beinhaltet:
Empfangen der seismischen Daten, die mindestens ein seismisches Signal beinhalten, das von der Emission eines seismischen Nutzsignals in einem Untergrund herrührt;
Identifizieren mindestens eines Abschnitts des mindestens einen seismischen Signals, der Reflexionen des seismischen Nutzsignals in der Lagerstättenzone entspricht;
Bestimmen einer Länge des seismischen Nutzsignals;
Empfangen von Bohrlochdaten, die der identifizierten Lagerstättenzone entsprechen;
Trainieren des neuronalen Netzwerks unter Verwendung von Folgendem:
einer Vielzahl von Teilabschnitten des mindestens einen Abschnitts als Eingangsvariablen, wobei die Teilabschnitte des Abschnitts eine Länge aufweisen, die von der bestimmten Länge des seismischen Nutzsignals abhängt, und
mindestens einem Element von Bohrlochdaten oder einer geologischen Information, die den Bohrlochdaten entspricht, als Zielvariable.

14. Verfahren gemäß Anspruch 13, wobei die Nutzsignallänge gemäß einer Autokorrelationsberechnung des mindestens einen Abschnitts bestimmt wird.

15. Ein Computerprogramm, beinhaltend computerlesbare Anweisungen, die, wenn sie in einer geeigneten Computervorrichtung ausgeführt werden, bewirken, dass die Computervorrichtung das Verfahren gemäß einem der vorhergehenden Ansprüche durchführt.

## Revendications

1. Un procédé pour le traitement de données sismiques concernant une zone réservoir comprenant une pluralité de puits substantiellement verticaux ayant des trajectoires bien définies et un ou plusieurs puits non verticaux ; le procédé comprenant :
a) l'obtention (500) d'un réseau de neurones entraîné, ayant été entraîné pour inférer des données de puits à partir de données sismiques et ayant été entraîné sur des données de puits d'entraînement concernant uniquement des puits ayant des trajectoires bien définies ;
b) la sélection (510) d'un puits non vertical parmi lesdits un ou plusieurs puits non verticaux, ledit puits non vertical sélectionné ayant une trajectoire journalisée associée ;
c) l'utilisation (520) dudit réseau de neurones entraîné pour inverser des données sismiques concernant ladite zone réservoir, afin d'obtenir des données de puits d'inversion ;
le procédé étant **caractérisé en ce qu'**il comprend en outre :
d) la comparaison desdites données de puits d'inversion à des données de puits observées concernant le puits non vertical sélectionné ;
e) la détermination (530), sur la base de ladite comparaison, d'une ou de plusieurs trajectoires corrigées candidates pour le puits non vertical sélectionné, où les une ou plusieurs trajectoires corrigées candidates sont corrigées par rapport à la trajectoire journalisée ; et
f) la validation (540) de ladite trajectoire parmi lesdites une ou plusieurs trajectoires corrigées candidates afin de déterminer une trajectoire corrigée validée pour le puits non vertical sélectionné.

2. Un procédé tel que revendiqué dans la revendication 1, où lesdites données de puits observées comprennent des données de puits journalisées durant le forage du puits non vertical sélectionné, et ladite trajectoire journalisée comprend la trajectoire journalisée durant ledit forage.

3. Un procédé tel que revendiqué dans la revendication 2, où ladite étape de validation comprend :
la sélection d'une trajectoire corrigée candidate parmi lesdites une ou plusieurs trajectoires corrigées candidates ;
la sélection d'un sous-ensemble d'entraînement d'au moins ladite pluralité de puits substantiellement verticaux, et d'un sous-ensemble de validation d'au moins ladite pluralité de puits substantiellement verticaux, le sous-ensemble d'entraînement étant différent dudit sous-ensemble de validation ;
le ré-entraînement du réseau de neurones en utilisant des données d'entraînement concernant ledit sous-ensemble d'entraînement et le puits non vertical ayant une trajectoire définie par la trajectoire corrigée candidate sélectionnée ;
l'utilisation du réseau de neurones ré-entraîné afin de prédire des données de puits concernant le sous-ensemble de validation ;
la comparaison des données de puits prédites à des données de puits connues pour le sous-ensemble de validation.

4. Un procédé tel que revendiqué dans la revendication 3, le procédé comprenant :
la réalisation de ladite étape de validation pour chaque trajectoire parmi lesdites une ou plusieurs trajectoires corrigées candidates ; et
la sélection, en tant que dite trajectoire corrigée validée, de la trajectoire corrigée candidate pour laquelle les données de puits prédites sont les plus similaires aux données de puits connues à ladite étape de comparaison des données de puits prédites à des données de puits connues pour le sous-ensemble de validation.

5. Un procédé tel que revendiqué dans n'importe quelle revendication précédente, où ladite étape d) comprend la détermination en tant que trajectoire corrigée candidate, d'une trajectoire qui maximise la corrélation desdites données de puits d'inversion avec des données de puits observées.

6. Un procédé tel que revendiqué dans n'importe quelle revendication précédente, où les étapes d) et e) sont réalisées par portion de trajectoire du puits non vertical sélectionné, où chacune desdites portions comprend une région respective d'incertitude et chaque trajectoire corrigée candidate est déterminée au sein de la région respective d'incertitude pour chacune desdits portions ; et où l'étape c) est réalisée de manière individuelle par portion, en considérant chaque portion comme un puits vertical.

7. Un procédé tel que revendiqué dans n'importe quelle revendication précédente, où l'étape e) est réalisée en tenant compte d'une ou de plusieurs contraintes, de sorte que lesdites une ou plusieurs trajectoires corrigées candidates respectent lesdites contraintes ; où lesdites une ou plusieurs contraintes comprennent une ou plusieurs contraintes de forage basées sur la physique des forages et/ou où lesdites une ou plusieurs contraintes définissent une courbure maximale et/ou un angle de déviation maximal le long de la trajectoire.

8. Un procédé tel que revendiqué dans n'importe quelle revendication précédente où lesdites données de puits d'entraînement dans un premier entraînement dudit réseau de neurones concernent uniquement ladite pluralité de puits substantiellement verticaux.

9. Un procédé tel que revendiqué dans n'importe quelle revendication précédente, comprenant :
la réalisation des étapes b) à f) de manière itérative pour chacun desdits puits non verticaux, où, pour chaque itération, le réseau de neurones est ré-entrainé avec des données d'entraînement comprenant des données concernant le puits non vertical validé telles que validées dans cette itération ; et
l'utilisation du réseau de neurones entraîné à l'itération finale afin de réaliser une inversion sur des données sismiques supplémentaires concernant ladite zone réservoir afin d'obtenir des données de puits supplémentaires concernant ladite zone réservoir.

10. Un procédé tel que revendiqué dans la revendication 9 comprenant une étape finale de ré-entraînement du réseau de neurones sur tous les puits non verticaux validés ; et
l'utilisation du réseau de neurones ré-entraîné afin de réaliser une inversion sur des données sismiques supplémentaires concernant ladite zone réservoir afin d'obtenir des données de puits supplémentaires concernant ladite zone réservoir.

11. Un procédé tel que revendiqué dans n'importe quelle revendication précédente, où lesdites données sismiques comprennent soit l'une, soit les deux, des suivantes :
une teneur haute fréquence de jusqu'à 3 fois la fréquence d'une ondelette sismique émise dans un sous-sol afin d'obtenir lesdites données sismiques ; et/ou
des données sismiques avant sommation (« pre-stack »).

12. Un procédé tel que revendiqué dans n'importe quelle revendication précédente,
comprenant une étape initiale d'entraînement dudit réseau de neurones sur la base de données d'entraînement concernant uniquement lesdits puits substantiellement verticaux afin d'obtenir ledit réseau de neurones entraîné.

13. Un procédé tel que revendiqué dans la revendication 12, où ladite étape initiale et toute autre étape d'entraînement ou de ré-entraînement comprennent :
la réception desdites données sismiques comprenant au moins un signal sismique dérivé de l'émission d'une ondelette sismique dans un sous-sol ;
l'identification d'au moins une portion dudit au moins un signal sismique correspondant à des réflexions de l'ondelette sismique dans la zone réservoir ;
la détermination d'une longueur de l'ondelette sismique ;
la réception de données de puits correspondant à ladite zone réservoir identifiée ;
l'entraînement du réseau de neurones en utilisant :
une pluralité de sous-portions de ladite au moins une portion comme variables d'entrée, lesdites sous-portions de la portion ayant une longueur qui dépend de la longueur de l'ondelette sismique déterminée, et
au moins un élément de données de puits, ou d'informations géologiques correspondant auxdites données de puits, comme variable cible.

14. Un procédé tel que revendiqué dans la revendication 13, où la longueur d'ondelette est déterminée selon un calcul d'autocorrélation de ladite au moins une portion.

15. Un programme informatique comprenant des instructions lisibles par ordinateur qui, lorsqu'elles sont exécutées sur un appareil informatique adéquat, amènent l'appareil informatique à réaliser le procédé de n'importe quelle revendication précédente.
